# EUROPÄISCHE PATENTANMELDUNG

(11) **EP 2 942 154 A1**
(43) Veröffentlichungstag der Anmeldung: **11.11.2015**
(21) Anmeldenummer: 15161671.1
(22) Anmeldetag: 30.03.2015
(51) Int. Cl.: B25B 11/00, B23Q 3/08, B23C 3/00, B23Q 3/06, B29D 99/00, B26D 3/00, B64C 3/20, B23Q 3/10

(54) **SPANNVORRICHTUNG FÜR EIN WERKSTÜCK MIT WABENSTRUKTUR**

(30) Priorität: 29.04.2014 AT 503102014
(71) Anmelder: GFM GmbH, 4400 Steyr (AT)
(72) Erfinder: Heidlmayer, Franz, 4502 St. Marien (AT)
(74) Vertreter: Patentanwaltskanzlei Hübscher

(57) **Zusammenfassung**

Es wird eine Spannvorrichtung für ein Werkstück (1) mit Wabenstruktur beschrieben, die einen mit Unterdruck beaufschlagbaren Tisch (8) und eine auf den Tisch (8) aufsetzbare, das Werkstück (1) im Bereich einer durch die Stirnseiten der Waben (2) bestimmten, bereits profilierten Oberfläche (3) aufnehmende Spannplatte (10) umfasst, deren der Negativform der profilierten Oberfläche (3) des Werkstücks (1) entsprechende Aufnahmefläche (11) mit Saugöffnungen zum Tisch (8) versehen ist. Um vorteilhafte Spannbedingungen zu schaffen, wird vorgeschlagen, dass die Spannplatte (10) eine offenzellige Struktur aufweist.

## Beschreibung

Die Erfindung bezieht sich auf eine Spannvorrichtung für ein Werkstück mit Wabenstruktur, umfassend einen mit Unterdruck beaufschlagbaren Tisch und eine auf den Tisch aufsetzbare, das Werkstück im Bereich einer durch die Stirnseiten der Waben bestimmten, bereits profilierten Oberfläche aufnehmende Spannplatte, deren der Negativform der profilierten Oberfläche des Werkstücks entsprechende Aufnahmefläche mit Saugöffnungen zum Tisch versehen ist.

Leichtbauteile, wie sie beispielsweise im Flugzeugbau eingesetzt werden, weisen einen Kern mit einer Wabenstruktur auf, der mit Deckschichten zu einem Verbundkörper gefügt wird. Da der Kern das formgebende Element darstellt, sind die beiden durch die Stirnseiten der Waben bestimmten Oberflächen mit Hilfe von Schneid- oder Fräswerkzeugen zu bearbeiten. Das bearbeitungsgerechte Spannen solcher Werkstücke mit Wabenstruktur stellt keine Schwierigkeiten dar, solange das Werkstück auf einer Seite eine ebene Oberfläche aufweist, weil in diesem Fall gemäß dem Stand der Technik (DE 10 2011 100 702 A1, DE 41 30 623 A1) nach einem Abkleben der Wabenöffnungen auf der Seite der ebenen Oberfläche mit einer luftundurchlässigen Folie das Werkstück auf einem mit Unterduck beaufschlagbaren, luftdurchlässigen Tisch bearbeitungsgerecht festgehalten werden kann, und zwar über die gesamte Aufspannfläche. Nach dem Profilieren der einen Oberfläche ist das Werkstück jedoch zum Bearbeiten der gegenüberliegenden Oberfläche zu wenden, sodass das Werkstück über die bereits profilierte Oberfläche gespannt werden muss. Zu diesem Zweck wird eine Spannplatte eingesetzt (DE 41 30 623 A1), die eine der Negativform der profilierten Werkstückoberfläche entsprechende Aufnahme für das Werkstück bildet, das somit nach einem Verschließen der Wabenöffnungen mit einer Folie satt an der Aufnahmefläche der Spannplatte anliegt. Mit Hilfe von in der Spannplatte vorgesehenen Saugöffnungen kann daher das Werkstück über seine bereits bearbeitete Oberfläche durch die Spannplatte hindurch an den Tisch angesaugt werden. Wegen der begrenzten Anzahl von Saugöffnungen ist allerdings die Spannwirkung im Vergleich zu einer unmittelbaren Ansaugung des Werkstücks an den Tisch erheblich verringert, selbst wenn die Aufnahmefläche der Spannplatte mit an die Saugöffnungen angeschlossenen Verteilernuten versehen ist. Dazu kommt noch, dass die spanabhebende Bearbeitung der üblicherweise aus einem Leichtmetall gefertigten Spannplatten aufwendig ist. Um diesen Aufwand für die Bearbeitung der zweiten Oberfläche zu vermeiden, wurde zwar bereits vorgeschlagen (DE 10 2011 100 702 A1), das wabenartige Werkstück auf der einen Seite so zu bearbeiten, dass nach einem Biegen des Werkstücks nicht nur die bearbeitete Oberfläche, sondern auch die für das Spannen des Werkstücks erforderliche ebene Oberfläche die vorgegebenen Oberflächenverläufe einnehmen, doch sind solche Biegungen nur begrenzt möglich und für manche Anwendungsfälle ungeeignet.

Der Erfindung liegt somit die Aufgabe zugrunde, eine Spannvorrichtung für ein auf beiden Wabenseiten zu bearbeitendes Werkstück mit Wabenstruktur so auszugestalten, dass für das bereits auf einer Wabenseite bearbeitete Werkstück mit einem vergleichsweise geringen Aufwand Aufspannbedingungen sichergestellt werden können, die der unmittelbaren Aufspannung des Werkstücks auf einem besaugten Tisch entsprechen.

Die Erfindung löst die gestellte Aufgabe dadurch, dass die Spannplatte eine offenzellige Struktur aufweist.

Die offenzellige Struktur der Spannplatte erlaubt einen über die gesamte Aufnahmefläche gleichmäßigen Saugdurchgriff durch die Spannplatte, weil die offenzellige Struktur der Spannplatte eine gleichmäßige Besaugung der gesamten Aufnahmefläche erlaubt, in der ja offene Strukturzellen münden. Dies bedeutet, dass ein Werkstück mit Wabenstruktur, das mit seiner durch eine luftdichte Folie abgedeckten, bereits profilierten Oberfläche auf die formgleiche Aufnahmefläche der Spannplatte aufgesetzt wird, über die offenzellige Struktur der Spannplatte in einer Weise gehalten wird, die durchaus mit der unmittelbaren Ansaugung des noch nicht bearbeiteten Werkstücks an den Tisch verglichen werden kann. Mit der gleichmäßigen Aufspannung des Werkstücks über die gesamte Aufnahmefläche der Spannplatte wird die Bearbeitung des Werkstücks insbesondere in dünnen, eine geringere Eigenfestigkeit aufweisenden Randbereichen erleichtert, weil das Werkstück auch im Bereich dieser dünnen Wandbereiche wirksam an die Aufnahmefläche angesaugt wird.

Besonders vorteilhafte Konstruktionsbedingungen ergeben sich wenn die offenzellige Struktur der Spannplatte durch eine Wabenstruktur erreicht wird, weil in diesem Fall die Waben, die mit ihren Stirnseiten die Aufnahmefläche bestimmen, in Ansaugrichtung parallel ausgerichtete, durch die Wabenwände voneinander getrennte Strömungskanäle bilden, die nicht nur vergleichsweise große Strömungsquerschnitte aufweisen, sondern auch einen entsprechend niedrigen Strömungswiderstand bieten.

Die Zentrierung des Werkstücks gegenüber der Spannplatte bedarf aufgrund der Wabenstruktur der Spannplatte entsprechender Maßnahmen. Eine vorteilhafte Zentrierung des Werkstücks gegenüber der Aufnahmefläche der Spannplatte kann in vorteilhafter Art dadurch erreicht werden, dass die Spannplatte im Anschluss an die Aufnahmefläche für das Werkstück einen einspringenden, mit einem Gegenanschlag des Werkstücks zusammenwirkenden Zentrieranschlag bildet. Der Gegenanschlag des Werkstücks ragt demgemäß gegenüber der bereits profilierten Oberfläche vor, sodass diese Gegenanschläge das Niederhalten des Werkstücks im Bereich der zu bearbeitenden Randbereiche unterstützen, zumal diese Gegenanschläge erst nach der Bearbeitung der zweiten Oberfläche des Werkstücks abgetrennt werden müssen.

Die offenzellige Struktur der Spannplatte eröffnet darüber hinaus die Möglichkeit, die Aufnahmefläche der Spannplatte mit den für die Bearbeitung des Werkstücks vorgesehenen Vorrichtungen herstellen zu können. Zu diesem Zweck braucht ja nur die entsprechend dem Werkstück bearbeitungsgerecht an den Tisch angesaugte Spannplatte zur Herstellung der der Negativform der profilierten Oberfläche des Werkstücks entsprechenden Aufnahmefläche mit dem zur Profilierung der Oberfläche des Werkstücks vorgesehenen Vorrichtung bearbeitet zu werden, allenfalls mit gesonderten Werkzeugen, wenn aufgrund der Negativform die für die Bearbeitung der Positivform eingesetzten Werkzeuge ungeeignet sind. Dies gilt wegen der strukturabhängigen Bearbeitungsbedingungen insbesondere für Spannplatten mit einer Wabenstruktur. Da die Aufnahmefläche der Spannplatte der Negativform des aufzunehmenden Werkstücks entspricht, ergeben sich für die Steuerung der für die Herstellung der profilierten Werkstückoberfläche programmierten Werkzeugmaschinen programmtechnisch nur geringe Änderungen, um die Aufnahmefläche für die Spannplatte zu bearbeiten.

In der Zeichnung ist der Erfindungsgegenstand beispielsweise dargestellt. Es zeigen
- Fig. 1: eine Spannvorrichtung für ein Werkstück mit Wabenstruktur in einem schematischen Querschnitt durch das an den Tisch angesaugte Werkstück,
- Fig. 2: die für die Bearbeitung der Aufnahmefläche auf den Tisch aufgespannte Spannplatte in einem schematischen Querschnitt,
- Fig. 3: das über die Spannplatte gegenüber dem Tisch bearbeitungsgerecht gespannte Werkstück in einer Darstellung gemäß den Fig. 1 und 2 und
- Fig. 4: einen Schnitt durch das fertiggestellte Werkstück.

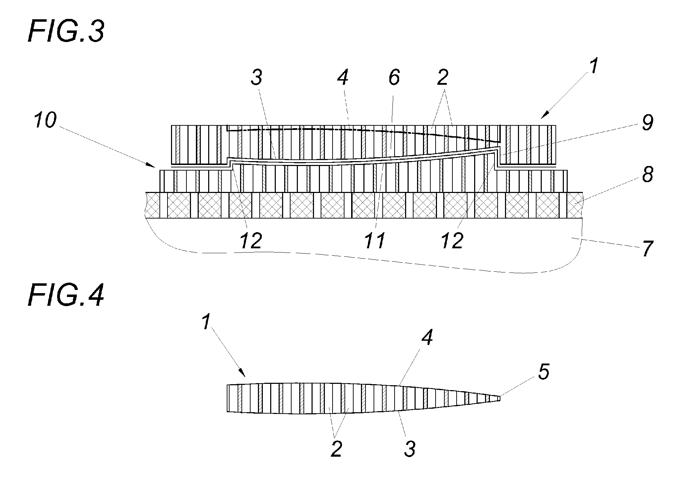

Das bearbeitete Werkstück 1 mit einer Wabenstruktur, beispielsweise der Kern eines Flügelprofils, weist gemäß der Fig. 4 zwei einander gegenüberliegende, jeweils durch die Stirnseiten der Waben 2 bestimmte, profilierte Oberflächen 3 und 4 auf, die auf einer Längsseite des Werkstücks 1 in einem dünnen Rand 5 auslaufen.

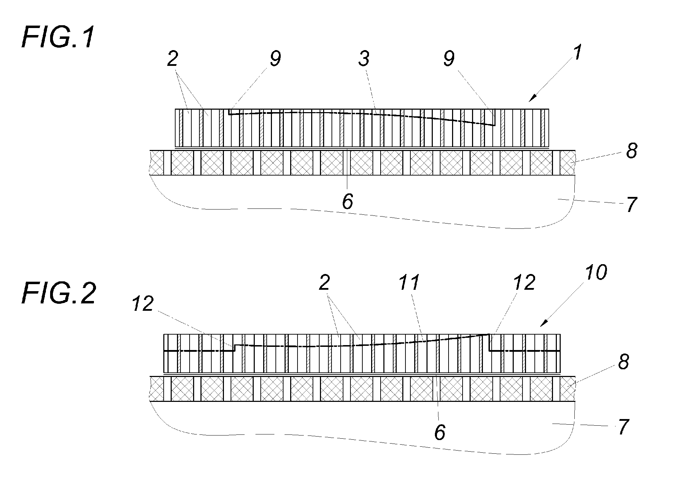

Zur Herstellung eines solchen Werkstücks 1 wird gemäß der Fig. 1 von einer Wabenplatte mit parallelen Oberflächen ausgegangen, die auf einer Seite mit einer luftdichten Folie 6 abgeklebt wird, um mit dieser abgeklebten Seite auf einen an einen Saugkasten 7 angeschlossenen, luftdurchlässigen Tisch 8 ausgerichtet aufgesetzt zu werden. Aufgrund der Unterdruckbeaufschlagung des Tisches 8 über den Saugkasten 7 wird somit das Werkstück 1 bearbeitungsgerecht auf dem Tisch 8 niedergespannt. Die eine der beiden Oberflächen 3, 4 kann somit mit Hilfe einer mehrachsigen Bearbeitungsvorrichtung bearbeitet werden, die beispielsweise mit Messer- oder Fräswerkzeugen bestückt wird. In der Fig. 1 ist die zu bearbeitende Oberfläche 3 strichpunktiert eingezeichnet. Die über die zu bearbeitende Oberfläche 3 überstehenden Randbereiche des Werkstücks 1 dienen als Gegenanschläge 9 für die Zentrierung des Werkstücks 1 gegenüber einer Spannplatte 10, auf der das Werkstück 1 für die Bearbeitung der zweiten Oberfläche 4 festgehalten wird.

Diese Spannplatte 10, die offenzellig ausgebildet sein muss und vorzugsweise ebenfalls aus einer Wabenplatte gefertigt wird, ist mit einer Aufnahmefläche 11 zu versehen, die der Negativform der bereits profilierten Oberfläche 3 des Werkstücks 1 entspricht. Die Herstellung dieser Aufnahmefläche 11 erfolgt vorzugsweise mit der Bearbeitungvorrichtung, mit der die profilierte Oberfläche 3 des Werkstücks 1 bearbeitet wurde. Wegen der in Bezug auf die profilierte Oberfläche 3 komplementären Form der Aufnahmefläche 11 kann es allerdings notwendig werden, gesonderte Schneid- und Fräswerkzeuge einzusetzen. Die Spannplatte 10 wird zu ihrer Bearbeitung in analoger Art durch ein Abkleben einer Plattenseite mit einer luftundurchlässigen Folie 6 an den Tisch 8 entsprechend ausgerichtet angesaugt. Die der Negativform der Oberfläche 3 entsprechende Aufnahmefläche 11 kann somit in einfacher Weise hergestellt werden, wobei die Spannplatte 10 mit einspringenden Zentrieranschlägen 12 versehen wird, die mit den Gegenanschlägen 9 des einseitig bearbeiteten Werkstücks 1 zusammenwirken.

In der Fig. 3 ist die Aufspannung des Werkstücks 1 zur Bearbeitung der zweiten Oberfläche 4 veranschaulicht. Das Werkstück 1 wird mit der durch eine luftdichte Folie 6 abgedeckten, bereits profilierten Oberfläche 3 auf die Aufnahmefläche 11 der ausgerichtet auf dem Tisch 8 aufgesetzten Spannplatte 10 aufgelegt, wobei die Zentrieranschläge 12 das Werkstück 1 über dessen Gegenanschläge 9 genau gegenüber der Spannplatte 10 ausrichten. Da sich über die Wabenstruktur der Spannplatte 10 ein weitgehender Durchgriff des Unterdrucks vom Saugkasten 7 auf das Werkstück 1 ergibt, wird das Werkstück 1 in analoger Weise zur unmittelbaren Aufspannung gemäß der Fig. 1 an der Spannplatte 10 bearbeitungsgerecht angesaugt gehalten, sodass die Oberfläche 4 bearbeitet werden kann.

Wie sich aus der Fig. 3 entnehmen lässt, erfolgt die Bearbeitung so, dass die überstehenden Gegenanschläge 9 erst nach der vollständigen Bearbeitung der Oberfläche 4 abgetrennt werden, sodass für die Bearbeitung des Werkstücks 1 im auslaufenden Bereich des Rands 5 die überstehenden Gegenanschläge 9 für eine sichere Halterung des Werkstücks 1 in diesem Randbereich sorgen.

## Patentansprüche

1. Spannvorrichtung für ein Werkstück (1) mit Wabenstruktur, umfassend einen mit Unterdruck beaufschlagbaren Tisch (8) und eine auf den Tisch (8) aufsetzbare, das Werkstück (1) im Bereich einer durch die Stirnseiten der Waben (2) bestimmten, bereits profilierten Oberfläche (3) aufnehmende Spannplatte (10), deren der Negativform der profilierten Oberfläche (3) des Werkstücks (1) entsprechende Aufnahmefläche (11) mit Saugöffnungen zum Tisch (8) versehen ist, **dadurch gekennzeichnet, dass** die Spannplatte (10) eine offenzellige Struktur aufweist.

2. Spannvorrichtung nach Anspruch 1, **dadurch gekennzeichnet, dass** die Spannplatte (10) eine Wabenstruktur aufweist.

3. Spannvorrichtung nach Anspruch 1 oder 2, **dadurch gekennzeichnet, dass** die Spannplatte (10) im Anschluss an die Aufnahmefläche (11) für das Werkstück (1) einen einspringenden, mit einem Gegenanschlag (9) des Werkstücks (1) zusammenwirkenden Zentrieranschlag (12) bildet.

4. Verfahren zum Herstellen einer Spannplatte (10) nach einem der Ansprüche 1 bis 3, **dadurch gekennzeichnet, dass** die entsprechend dem Werkstück (1) bearbeitungsgerecht an den Tisch (8) angesaugte Spannplatte (10) zur Herstellung der der Negativform der profilierten Oberfläche (3) des Werkstücks (1) entsprechenden Aufnahmefläche (11) mit einer zur Profilierung der Oberfläche (3) des Werkstücks (1) vorgesehenen Vorrichtung gegebenenfalls unter Einsatz gesonderter Werkzeuge bearbeitet wird.
